# FASCICULE DE BREVET EUROPEEN

(11) **EP 3 371 001 B1**
(45) Date de publication et mention de la délivrance du brevet: **11.09.2019**
(21) Numéro de dépôt: 16793850.5
(22) Date de dépôt: 07.11.2016
(51) Int. Cl.: B60N 2/28, B60N 2/01, B60N 2/02, B60N 2/06

(54) **NACELLE ET EMBASE POUR TRANSPORT D'UN ENFANT DANS UN VÉHICULE**
SITZ UND BASIS FÜR DEN TRANSPORT EINES KINDES IN EINEM FAHRZEUG
SEAT AND BASE FOR THE TRANSPORT OF A CHILD IN A VEHICLE

(30) Priorité: 05.11.2015 FR 1560636; 05.01.2016 FR 1650060; 07.07.2016 FR 1656562
(43) Date de publication de la demande: 12.09.2018
(73) Titulaire: Dorel France, 49309 Cholet Cedex (FR)
(72) Inventeur: PASQUIER, Nicolas, 49700 Doué La Fontaine (FR); BONNET, Philippe, 85140 Essarts en Bocage (FR)
(74) Mandataire: Vidon Brevets & Stratégie
(86) Numéro de dépôt international: PCT/EP2016/076884
(87) Numéro de publication internationale: WO 2017/077127

(56) Documents cités:
- EP-A1- 1 728 675
- WO-A1-2006/087719
- WO-A1-2016/001387
- US-A1- 2004 178 669
- US-B1- 6 283 545

## Description

### 1. Le domaine de l'invention

La présente invention concerne le domaine des équipements de puériculture, permettant le transport d'enfants en bas âge dans des véhicules, en toute sécurité. Plus précisément, l'invention concerne les ensembles, ou équipements, formés d'une embase destinée à être solidarisée à un véhicule et d'un élément amovible apte à recevoir un enfant, pouvant être solidarisé à l'embase ou désolidarisée de celle-ci.

Plus précisément encore, l'invention, concerne de tels équipements, dans lesquels l'élément amovible est une nacelle, dans laquelle l'enfant est installé dans une position allongée. L'invention concerne également les embases et les nacelles, considérés indépendamment.

### 2. Solutions de l'art antérieur

Les enfants en bas âge, notamment ceux qui sont âgés de moins de 6 mois, peuvent être transportés en sécurité dans des véhicules automobiles dans deux types d'équipements de transport : soit dans des sièges autos, usuellement appelés « coques » (de type « groupe 0+ » selon le Règlement R44), dans lesquels ils sont essentiellement semi-assis, et qui sont installés dans les véhicules de telle sorte que l'enfant soit dos à la route, soit dans des nacelles (de type « groupe 0 » selon le Règlement R44) dans lesquels les enfants sont allongés, et qui sont installés dans le véhicule de telle sorte que les enfants soient étendus perpendiculairement à la route.

Les coques et les nacelles peuvent généralement être soit installées dans un véhicule, soit utilisées pour transporter l'enfant en dehors du véhicule, à la main et/ou montées sur un châssis roulant de poussette, de façon à former une poussette ou un landau. Un adulte peut ainsi passer l'enfant d'une poussette ou d'un landau au véhicule automobile, sans avoir à sortir l'enfant de la coque ou de la nacelle. Un exemple est illustré dans le document US6283545.

Lors de l'installation de la coque ou de la nacelle dans le véhicule, il est nécessaire d'assurer une solidarisation très sûre et efficace de la coque ou de la nacelle au siège du véhicule, pour assurer la sécurité de l'enfant. Cette solidarisation peut se faire par le biais des ceintures de sécurité du véhicule. Cette solidarisation nécessite en général des manoeuvres relativement complexes et fastidieuses, qui sont parfois mal exécutées par les adultes. La sécurité de l'enfant est ainsi compromise.

Selon une autre approche, qui tend à se généraliser, la solidarisation est assurée par le système d'accrochage normalisé connu sous le nom de « ISOFIX », qui utilise des éléments de fixation prévus à cet effet dans le véhicule.

Pour simplifier l'installation dans le véhicule d'une coque dans laquelle est installé un enfant en bas âge, il est souvent prévu des embases, qui sont solidarisées à un siège de véhicule et qui comportent un système d'accrochage spécifique leur permettant de recevoir et de solidariser facilement une coque d'un modèle spécifique. Une fois l'embase fixée au siège du véhicule par des moyens adaptés, ceinture de sécurité ou pinces de fixation ISOFIX, il est plus aisé d'y solidariser un siège auto ou une coque, notamment en position dos à la route.

De telles embases ne sont en revanche pas bien adaptées pour recevoir des nacelles. En effet, les nacelles sont installées en position perpendiculaire à la route, et occupent donc une grande largeur du siège du véhicule, supérieure à la largeur d'une embase.

En conséquence, un utilisateur qui souhaiterait installer une nacelle sur une telle embase, devrait porter et maintenir la nacelle à bout de bras, au dessus de la banquette arrière du véhicule (après avoir introduit la nacelle dans l'espace correspondant, entre les dossiers avant et arrière, en tenant compte de l'ouverture disponible au niveau de la porte, et en maintenant la nacelle horizontale, si un enfant est présent), puis déposer la nacelle sur l'embase, de façon à assembler les deux éléments, sans voir précisément où sont les éléments de verrouillage de l'embase et de la nacelle, ou, en d'autres termes, à tâtons.

L'utilisateur doit notamment s'assurer que la nacelle ne bascule pas pendant son installation et son retrait (désinstallation), tant que le verrouillage n'est pas finalisé ou lorsque le déverrouillage est effectué, et que la nacelle se trouve en porte-à-faux par rapport à l'embase. Un tel basculement de la nacelle par rapport à l'embase en cours d'installation et de désinstallation.

La nécessité de s'opposer à ce basculement en même temps que l'on installe ou retire la nacelle n'est ni aisé, ni ergonomique.

Par ailleurs, cet encombrement important de la nacelle peut poser des problèmes dans certains véhicules, pour transporter simultanément un autre passager, et en particulier un autre enfant, par exemple dans un siège auto (lui-même le cas échéant également maintenu par des pinces ISOFIX).

L'homologation selon la réglementation européenne notamment d'un siège ou d'une nacelle suppose qu'il respecte un certain nombre d'obligations, d'une part en termes de sécurité et d'autre part en termes d'encombrement. En effet, le format des pinces ISOFIX est bien sûr standardisé, pour qu'il soit possible d'installer tout équipement respectant le standard dans tout véhicule équipé. Notamment, un gabarit est défini, prévoyant un encombrement maximal que doit respecter l'équipement, et en particulier une nacelle, par rapport à la position des crochets ISOFIX montés dans le véhicule. Le respect de ce gabarit est donc une obligation, pour une nacelle, qui conduit malheureusement à un déport important de celle-ci sur la banquette, vers la portière opposée à celle par laquelle se fait l'installation de l'embase, qui conduit dans certains véhicules à l'impossibilité d'installer en même temps un siège auto.

### 3. Objectifs de l'invention

La présente invention a pour objectif de pallier ces inconvénients de l'art antérieur.

En particulier, l'invention a pour objectif, selon au moins un mode de réalisation, de simplifier et de rendre plus efficace la mise en oeuvre et la solidarisation d'une nacelle dans un véhicule.

### 4. Exposé de l'invention

Ces objectifs, ainsi que d'autres qui apparaitront plus clairement par la suite, sont atteints à l'aide d'un équipement de transport d'un enfant en bas âge dans un véhicule, comprenant une embase destinée à être solidarisée à un siège dudit véhicule et une nacelle permettant d'accueillir ledit enfant en position allongée dans la direction longitudinale de la nacelle, et pouvant être solidarisée à ladite embase, une première portion de ladite nacelle s'étendant alors sensiblement au-dessus de ladite embase, et une seconde portion de ladite nacelle s'étendant au-delà ladite embase, des moyens de verrouillage assurant la solidarisation entre ladite nacelle et ladite embase.

Selon l'invention, l'équipement comprend en outre des moyens anti-basculement qui sont :
- actifs tant que ladite nacelle est dans une position de porte-à-faux par rapport à ladite embase, et qui s'opposent à un basculement de ladite nacelle par rapport à ladite embase dû audit porte-à-faux, mais autorisant un coulissement de ladite nacelle par rapport à ladite embase pour ramener ladite nacelle dans une position sans porte-à-faux par rapport à l'embase, lorsque lesdits moyens de verrouillage sont déverrouillés ou en cours de déverrouillage ; et
- inactifs lorsque ladite nacelle est dans ladite position sans porte-à-faux.

Ainsi, outre les états verrouillé (la nacelle est maintenue immobile par rapport à l'embase de façon sécurisée, permettant le transport) et déverrouillé (la nacelle peut être séparée de l'embase), l'invention introduit un état intermédiaire anti-basculement, tant que l'embase se trouve dans une situation de porte-à-faux potentiel.

Si, après une commande de déverrouillage (et/ou le cas échéant dans une situation de déverrouillage partiel, si les moyens anti-basculement agissent sur les moyens de verrouillage), la nacelle se trouve dans une telle situation de porte-à-faux, la séparation de la nacelle et de l'embase n'est pas permise. En d'autres termes, on ne passe pas directement de l'état verrouillé à l'état déverrouillé susmentionnés, mais dans un état intermédiaire, qui permet uniquement de ramener la nacelle d'une position en porte-à-faux à une position dans laquelle il n'y a plus de porte-à-faux. Ce n'est qu'à partir de ce moment que l'on se trouve réellement dans l'état (complètement) déverrouillée, autorisant la séparation de la nacelle et de l'embase.

Grâce à ces moyens anti-basculement, permettant cet état intermédiaire, toute situation de basculement intempestif peut être supprimée, améliorant la sécurité de l'enfant et le confort de manipulation de l'utilisateur.

En d'autres termes encore, lorsque la nacelle est en position d'installation sur l'embase, soit en position d'être verrouillée sur (ou déverrouillée de) l'embase, la seconde portion de la nacelle peut être en porte-à-faux par rapport à l'embase. Si les moyens de verrouillage sont désactivés ou mal activés, la nacelle peut être sujette à un mouvement de basculement par rapport à l'embase qui est dû à un moment de basculement généré, par exemple, par un choc infligé par inadvertance sur la nacelle par l'utilisateur, par un mouvement de l'enfant et/ou par le déséquilibre créé par la force de gravité agissant sur la nacelle lorsque elle est placée de façon asymétrique sur l'embase, et en particulier lorsque la seconde portion est placée en porte-à-faux par rapport à l'embase. Un tel positionnement en porte-à-faux étant avantageux en termes d'ergonomie et d'occupation de l'espace de l'habitacle du véhicule, on remédie au risque de basculement de la nacelle par rapport à l'embase en prévoyant des moyens anti-basculement distincts des moyens de verrouillage.

Ces moyens anti-basculement, montés sur la nacelle et sur l'embase, entrent en prise, ou coopèrent, les uns avec les autres lorsque la nacelle est en position d'installation sur l'embase de façon à créer au moins un point de liaison entre la nacelle et l'embase qui soit indépendant de l'état, activé ou non, des moyens de verrouillage, et qui permet d'annuler le moment de basculement généré par l'action d'une éventuelle force extérieure sur la nacelle, et notamment la force de gravité.

Selon un premier mode de réalisation, ladite nacelle, respectivement ladite embase, porte au moins un pion s'étendant sensiblement parallèlement à l'axe longitudinal de la nacelle (et donc parallèle à l'axe de coulissement de la nacelle par rapport à l'embase) et venant prendre appui contre une butée ménagée à cet effet dans ladite embase, respectivement ladite nacelle.

L'axe du pion étant parallèle à l'axe longitudinal de la nacelle (ou à l'axe de coulissement, s'il est porté par l'embase), l'assemblage et la désolidarisation se font naturellement, lors du déplacement en coulissement de la nacelle.

Selon un caractéristique particulière de l'invention, ledit ou lesdits pions sont portés par ladite nacelle.

Selon une autre caractéristique particulière de l'invention, ladite butée est la partie supérieure d'un logement apte à recevoir au moins une partie dudit pion.

Selon encore un autre aspect de l'invention, ledit pion est monté sur une partie inférieure de ladite nacelle, au voisinage du bord de la première portion le plus éloigné de la seconde portion.

Ainsi, le pion est placé de manière à ce que, lorsqu'il coopère avec la butée, il puisse créer un moment anti-basculement, opposé au moment de basculement, maintenant la nacelle de manière efficace tout en limitant les contraintes mécaniques sur le pion et la butée.

Selon un autre mode de réalisation, lesdits moyens anti-basculement comprennent au moins un élément de retenue formé sur ladite nacelle, et coopérant avec au moins un crochet de verrouillage de ladite embase, de façon à empêcher l'ouverture dudit crochet tant que ladite nacelle est dans une position de porte-à-faux.

Dans cette approche, une commande de déverrouillage peut être effectuée, mais le ou les crochets de verrouillage ne s'ouvrent pas (ou ne s'ouvrent pas complètement) tant que la nacelle n'a pas été ramenée dans une position sans porte-à-faux. L'état intermédiaire correspond donc à la situation dans laquelle une partie du crochet forme une butée coopérant avec l'élément de retenue, par exemple une barrette ou une languette, formant contrebutée.

Selon une caractéristique particulière, ledit élément de retenue comprend une barrette longitudinale formant saillie coopérant avec une butée solidaire dudit crochet, empêchant la rotation de ce dernier tant que ladite butée est en contact avec ladite barrette.

Selon un autre mode de réalisation, lesdits moyens anti-basculement peuvent comprendre au moins un système d'engrenage.

Notamment, lesdits moyens anti-basculement peuvent comprendre, sur ladite nacelle, une barre dentée présentant au moins une dent apte à coopérer avec une encoche formée sur ladite embase.

Selon un mode de réalisation particulier, ladite nacelle et ladite embase comprennent par ailleurs des éléments de guidage complémentaires permettant de réaliser un guidage essentiellement en translation entre ladite nacelle et ladite embase, selon une direction de translation sensiblement parallèle à la direction longitudinale de la nacelle.

Dans ce cas notamment, ladite nacelle et/ou ladite embase peut comprendre des moyens de sélection d'une position de transport parmi au moins deux positions de transport possibles, distribuées selon ladite direction de translation.

L'invention concerne également une nacelle d'une part et une embase d'autre part d'un équipement de transport d'un enfant en bas âge dans un véhicule tel que décrit ci-dessus.

### 5. Exposé des figures

L'invention sera mieux comprise à la lecture de la description suivante d'un mode de réalisation préférentiel, donné à titre illustratif et non limitatif, et accompagné des figures, parmi lesquelles :
- La figure 1 est une vue schématique en perspective d'une embase selon un premier mode de réalisation de l'invention ;
- La figure 2 est une vue schématique de dessous d'une nacelle selon le premier mode de réalisation de l'invention ;
- La figure 3 est une vue schématique de côté de la nacelle de la figure 2 ;
- La figure 4 est une vue schématique en perspective de l'interface entre l'embase et la nacelle selon le premier mode de réalisation ;
- La figure 5 est une vue de côté de la nacelle en position d'installation sur l'embase selon le premier mode de réalisation de l'invention ;
- La figure 6 est une vue agrandie de la portion entourée sur la figure 5, illustrant les moyens anti-basculement dans ce premier mode de réalisation ;
- Les figures 7A, 7B et 7C sont des vues en perspectives illustrant la cinématique de déconnexion des moyens anti-basculement de la figure 6 ;
- Les figures 8A et 8B illustrent le déplacement de la nacelle, selon un deuxième mode de réalisation ;
- Les figures 9A et 9B illustrent deux variantes pour le guidage de la nacelle selon ce deuxième mode de réalisation ;
- la figure 10 est une vue en perspective d'une nacelle selon un autre mode de réalisation ;
- la figure 11 est une vue en perspective montrant le dessous de la nacelle de la figure 10 partiellement représentée ;
- la figure 12 est une vue en perspective, par l'arrière, de la nacelle de la figure 10 ;
- la figure 13 illustre le déplacement de la nacelle de la figure 10 sur une embase, par exemple lors de son installation ;
- la figure 14 est vue montrant les moyens de sélection de la position de la nacelle de la figure 10 sur un crochet d'une embase représentée partiellement ;
- la figure 15 est une vue de détail des tiges métalliques et de l'élément de retenue anti-basculement de la nacelle de la figure 10 ;
- la figure 16 est une vue de détail de la nacelle de la figure 10 lorsqu'elle est fixée sur une embase ;
- les figures 17A et 17B sont des vues de détail des moyens anti-basculement de la nacelle de la figure 10 ;
- les figures 18A et 18B sont des vues de détail d'un deuxième mode de réalisation des moyens anti-basculement de la nacelle de la figure 10.

### 6. Description détaillée de modes de réalisation

### 6.1 équipement formé d'une nacelle et d'une embase

Un équipement de transport selon l'invention permet le transport d'un enfant en bas âge en position allongée. Il permet donc d'assurer le confort de l'enfant lors des divers déplacements du véhicule, tout en garantissant sa sécurité. La dissociation de la nacelle et de l'embase confère de plus à cet équipement de transport un caractère modulable avantageux.

La nacelle peut ainsi, le cas échéant, être solidarisée à différents moyens de transport, selon les besoins de l'utilisateur. A titre d'exemple, la nacelle peut soit être solidarisée à un équipement de type châssis de poussette ou de landau prévu à cet effet, lors des déplacements effectués à pied, soit être solidarisée à une embase selon l'invention, lors de l'utilisation d'un véhicule.

L'enfant peut être transféré à l'intérieur du véhicule tout en restant à l'intérieur de la nacelle, ce qui améliore son confort tout en limitant la mise en oeuvre de manipulations inutiles qui pourraient nuire à sa sécurité. La dissociation de la nacelle et de l'embase permet entre autres la mise en oeuvre sur des périodes de temps prolongées de moyens de fixations fiables et sécurisés de l'embase au siège du véhicule, indépendamment de la fréquence d'utilisation de l'équipement de transport.

La complémentarité des formes de l'embase et de la nacelle permet quant à elle un agencement plus aisé de ces derniers, sans nuire pour autant au caractère modulable de l'équipement de transport. Le guidage en translation mis en oeuvre entre la nacelle et l'embase selon une direction sensiblement parallèle à la direction longitudinale de la nacelle permet avantageusement de faciliter l'introduction et la manipulation de cette dernière dans l'habitacle du véhicule.

### 6.2 Embase

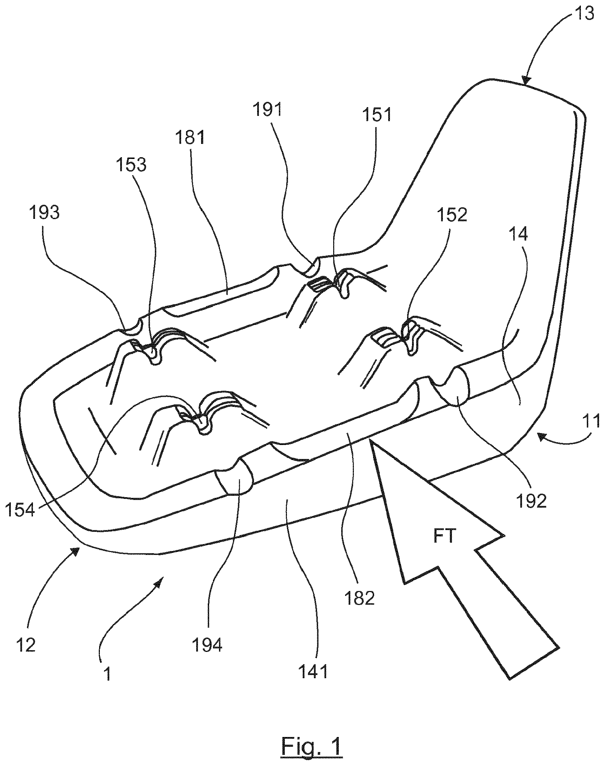

La figure 1 représente une embase 1 selon un mode de réalisation de l'invention. Cette embase 1 est destinée à être montée sur le siège d'un véhicule. Elle comprend pour cela des moyens adaptés de solidarisation au véhicule, connus de l'homme du métier, qui ne sont pas représentés sur la figure 1. Ces moyens de solidarisation peuvent notamment comprendre des pinces de fixation, connue sous le nom « pinces ISOFIX », fixées à proximité de l'extrémité arrière 11 de l'embase. De telles pinces de fixation peuvent venir se solidariser sur des anneaux d'ancrage spécifiques situés entre l'assise et le dossier du siège d'un véhicule.

Les moyens de solidarisation au véhicule peuvent également comprendre un troisième point de fixation, permettant de s'opposer au basculement du siège, par rotation autour de l'axe défini par les anneaux d'ancrage, par exemple sous la forme d'une sangle dite de « top tether » ou d'une jambe de support, fixée à proximité de l'extrémité avant 12 de l'embase. Cette jambe de support, s'étendant sensiblement verticalement vers le bas, permet à l'embase 1 de prendre appui sur le plancher du véhicule, à l'avant du siège.

Enfin, l'embase peut comprendre une barre anti-rebond 13, destinée à venir en appui contre le dossier du siège du véhicule, pour éviter toute rotation de l'embase 1 autour des anneaux d'ancrage ISOFIX.

### 6.3 Solidarisation d'une coque et d'une nacelle

Dans ce mode de réalisation, l'embase 1 comporte, de façon connue en elle-même, des moyens de réception d'un siège auto, par exemple une coque permettant le transport d'un enfant dans une position essentiellement semi-assise, dos à la route. Ces moyens de réception présentent une forme adaptée de la surface supérieure de l'embase 1, et notamment une bordure périphérique 14 permettant d'assurer un placement correct de la nacelle 3 sur l'embase 1, et par un ensemble de quatre crochets 151, 152, 153 et 154, permettant d'assurer le verrouillage de la nacelle 3 sur l'embase 1.

Ces crochets 151, 152, 153, 154 sont mobiles en rotation autour d'un axe horizontal, entre une position de verrouillage, dans laquelle ils peuvent maintenir la nacelle 3 solidarisée à l'embase, et une position de déverrouillage, dans laquelle ils autorisent le retrait de la coque. Ils sont, par défaut, maintenus par des moyens de rappel tels que des ressorts dans la position de verrouillage. Une commande de déverrouillage, placée par exemple sur la face avant de l'embase 1, permet de déplacer ces crochets 151, 152, 153 et 154 de leur position de verrouillage vers leur position de déverrouillage, pour permettre le retrait de la nacelle 3 placée sur l'embase 1. Alternativement, cette commande de déverrouillage peut être placée sur le dessus de l'embase 1, sur le côté, ou à tout emplacement accessible par un adulte.

L'embase 1 présente par ailleurs une forme lui permettant en outre de guider en translation une nacelle adaptée, dans une direction sensiblement horizontale et sensiblement perpendiculaire à la direction d'avancement du véhicule.

La structure de la nacelle présente généralement une orientation prédéfinie qui détermine en conséquence l'orientation de l'enfant qui y est installé. Ainsi, on définit une portion arrière de ladite nacelle, correspondant à la zone recevant les pieds de l'enfant, et une portion avant de ladite nacelle correspondant à la zone recevant la tête de l'enfant.

### 6.3 Solidarisation d'une nacelle selon un premier mode de réalisation particulier de l'invention

Selon ce mode de réalisation particulier, et comme illustré par la figure 1, l'embase 1 comprend, pour le guidage en translation d'une nacelle 3 adaptée, dans une direction sensiblement horizontale et sensiblement perpendiculaire à la direction d'avancement du véhicule, des découpes, ou échancrures, centrales 181 et 182 de la bordure périphérique 14. Lorsque considérées selon une vue de côté de l'embase 1, ces découpes centrales 181 et 182 sont alignées selon une direction correspondant à la direction de coulissement de l'embase, illustrée par la flèche FT, dans le prolongement l'une de l'autre, dans l'espace défini entre les crochets 151, 152, 153 et 154.

Ces découpes centrales 181 et 182 présentent une forme évasée, avec une base sensiblement plane et deux extrémités incurvées.

L'embase 1 comprend de plus, sur sa bordure périphérique 14 des encoches 191, 192, 193 et 194 placées de part et d'autre des découpes centrales 181 et 182. Lorsque considérées selon une vue de côté de l'embase 1, les couples d'encoches 191, 192 et 193, 194 sont respectivement alignés parallèlement à la direction de coulissement et avec des supports 1510, 1520, 1530 et 1540, de crochets 151, 152 et 153, 154 respectivement. Dans le mode de réalisation de la figure 1, ces encoches 191 à 194 présentent une forme sensiblement demi-cylindrique.

Les crochets 151 à 154 sont agencés dans les supports associés 1510, 1520, 1530 et 1540, formés de manière que ces derniers définissent, en combinaison avec leur crochet respectif, une zone d'enserrement délimitée de façon suffisante pour maintenir efficacement la nacelle.

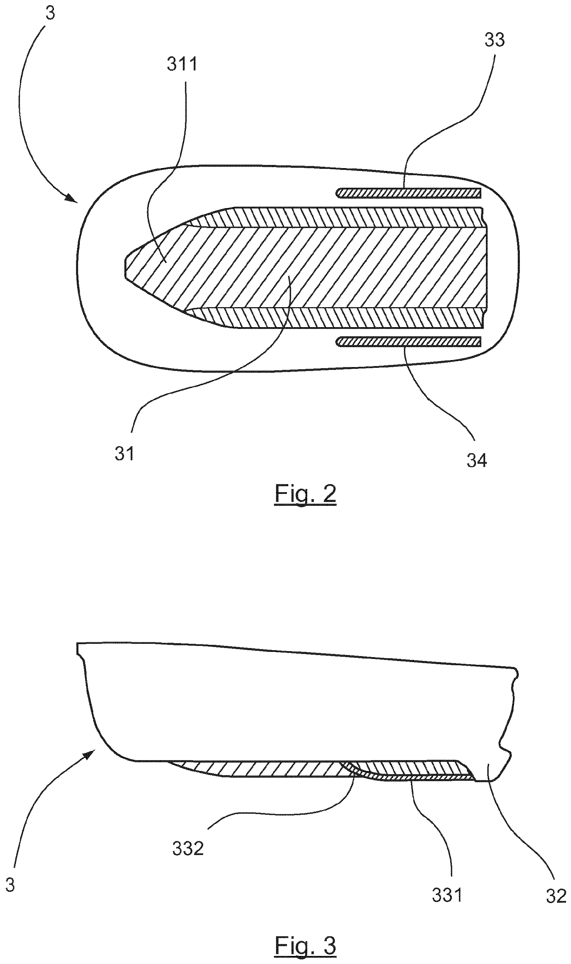

Une nacelle 3, spécialement adaptée pour être portée par l'embase 1, est représentée sur les figures 2 et 3.

Cette nacelle 3 comprend ainsi, sur sa face inférieure, un bossage formant coulisseau 31, qui s'étend selon une direction longitudinale. Ce coulisseau 31 présente une forme complémentaire de la forme de rainure incurvée des découpes 181 et 182. Il permet ainsi le guidage en translation selon un axe horizontal (F1), perpendiculaire à la direction d'avancement du véhicule lorsque l'embase est installé dans le véhicule (dans une variante, la translation peut se faire sur des niveaux variant légèrement), de la nacelle 3 dans les découpes complémentaires 181 et 182 de la bordure périphérique 14, ces découpes 181 et 182 formant coulisse.

La nacelle 3 présente également une butée 32, formée à l'arrière. La mise en contact selon une liaison de type appui plan de la butée 32 avec une zone d'arrêt correspondante de l'embase 1, ménagée sur l'une des faces extérieures 141 de la bordure périphérique 14, permet notamment d'interrompre le mouvement de translation de la nacelle 3 lorsque celle-ci est dans une position d'installation. Cette interruption peut également être assurée au niveau des crochets et/ou des supports de crochet.

La nacelle 3 comprend de plus deux tiges cylindriques métalliques 33, 34 disposées de part et d'autre du coulisseau 31, chacune de ces tiges étant constituée d'une portion rectiligne 331, et d'au moins une portion incurvée 332, à l'extrémité de la tige orientée vers l'avant de la nacelle.

Plus précisément, la portion rectiligne 331 de la tige 33 s'étend selon une direction sensiblement parallèle à la direction longitudinale de la nacelle 3 à partir de la butée 32 et est agencée de manière à pouvoir, lorsque le bossage 31 coulisse dans les découpes 181 et 182, venir s'engager dans une des encoches de la bordure périphérique 14. A cet effet, la portion rectiligne 331 de la tige 33 est dimensionnée de manière à présenter une forme sensiblement complémentaire à la forme incurvée du renfoncement.

La portion d'extrémité 332 est incurvée vers le haut et s'étend dans le prolongement de la portion rectiligne 331, en formant ici un angle obtus avec cette dernière. Cette portion incurvée 332 est solidarisée avec la face inférieure de la nacelle 3. La formation entre la portion rectiligne 331 et la portion incurvée 332 d'un angle obtus a pour avantage de permettre, lors du coulissement de la nacelle, le verrouillage des crochets 151 à 154 autour des barres et, notamment, des portions 331.

Il est cependant à noter que la formation par la portion incurvée 332 d'un angle obtus avec la portion rectiligne 331 ne constitue qu'un exemple de mode de réalisation possible de l'invention. Selon un autre mode de réalisation présentant une configuration autre que des crochets, l'homme du métier aurait ainsi pu opter pour un agencement de la portion incurvée 332 tel que cette dernière forme avec la partie rectiligne 331 un angle droit ou aigu.

La portion incurvée 332 telle que représentée sur les figures 2 et 3 présente un faible rayon de courbure à son extrémité proximale de la portion rectiligne 331 et un rayon de courbure plus élevé sur la partie subséquente de sa longueur, conférant ainsi à cette dernière partie une forme sensiblement rectiligne.

Il est cependant à noter que la mise en oeuvre de ces différents rayons de courbure sur la portion incurvée 332 n'est donnée qu'à titre d'exemple non limitatif, l'homme du métier ayant pu selon un autre mode de réalisation opter pour la mise en oeuvre de rayons de courbure appartenant à des gammes de valeurs différentes.

Les caractéristiques propres à la tige 33 et à ses constituants s'appliquent *mutatis mutandis* à la tige 34.

De manière préférentielle, le bossage 31 présente une portion d'extrémité 311 de largeur réduite. Cette portion de largeur réduite est ménagée à proximité de la portion avant de la nacelle 3. Le bossage 31 présente une forme, par exemple en pointe ou en triangle tronqué, se développant progressivement de l'avant vers l'arrière de la nacelle, jusqu'à une portion de forme complémentaire des découpes 181 et 182 formant coulisse.

Cette portion de largeur réduite permet de faciliter l'introduction de la nacelle dans l'embase, en ajustant progressivement la position de la nacelle 3 lorsque cette dernière est introduite dans l'embase 1 selon une direction légèrement désaxée par rapport à l'axe défini par les découpes 181 et 182 de l'embase 1.

Tel que représenté partiellement dans la figure 1, il est ainsi possible de placer la nacelle 3 sur l'embase 1 par un mouvement de translation dans la direction horizontale perpendiculaire à la direction d'avancement du véhicule, le bossage 31 et les tiges 33 et 34 s'engageant respectivement par coulissement dans la découpe centrale 182 et les renforcements 194 et 192.

Selon ce mode de réalisation, il est également possible de placer la nacelle 3 en la posant directement sur l'embase 1, selon un mouvement sensiblement vertical, de telle sorte que le bossage 31 et les tiges 33 et 34 viennent respectivement s'engager dans les échancrures centrales 181, 182 et les encoches 191 à 194, pendant que les crochets 151 à 154 viennent en prise avec les tiges 33 et 34. Les formes évasées des échancrures 181, 182 et des encoches 191 à 194 permettent cette introduction par le dessus.

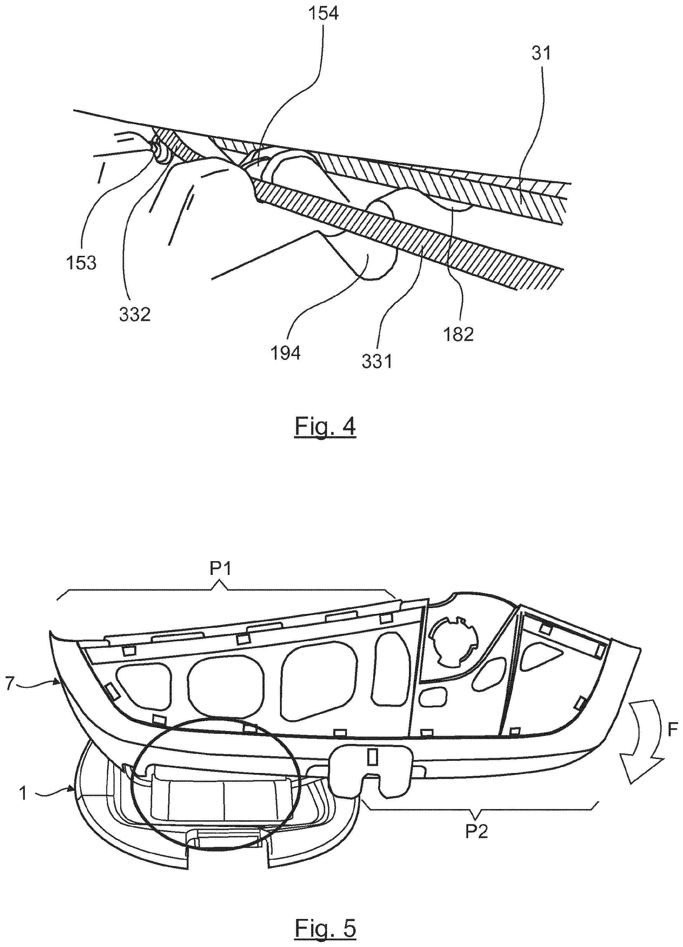

Lors d'un déplacement en translation de la nacelle 3 selon sa direction longitudinale et tel que représenté par la figure 4, la portion incurvée 332 de la tige coulisse le long de l'encoche 194, puis atteint le support de crochet 1540, et vient ensuite en contact avec le crochet 154. Le déplacement en translation de la nacelle 3 force le crochet 154 à passer de sa position de déverrouillage à sa position de verrouillage, lors du passage de la portion incurvée 332 à travers la zone d'enserrement du crochet 154. Le crochet 154 enserre alors, en combinaison avec le renforcement 1540 associé, la portion rectiligne 331 de la tige 33. De manière préférentielle, le dimensionnement du crochet 154 et du renforcement 1540 associé est réalisé de manière à ce que le diamètre de la zone d'enserrement soit sensiblement supérieur à celui de la section transversale de la portion rectiligne 331. Le passage du crochet 154 en position de verrouillage permet ainsi de limiter les déplacements latéraux de la portion rectiligne 331 tout en permettant ses déplacements longitudinaux.

La poursuite du coulissement de la nacelle par rapport à l'embase 1 permet d'atteindre le second crochet 153, qui se verrouille de la même façon sur la tige 33.

En raison de la conformation du crochet 154 par rapport à celle de la tige 33, le passage du crochet 154 vers sa position verrouillée autour de la portion rectiligne 331 de la tige empêche tout passage ultérieur de la portion incurvée 332 de la tige au travers de la zone d'enserrement, de par le seul déplacement en translation de la nacelle 3 selon une direction opposée.

Le comportement du crochet 154 lors sa mise en contact avec l'extrémité incurvée 332 de la tige 33 et notamment son verrouillage subséquent sur cette tige s'applique donc *mutatis mutandis* au passage des tiges 33 ou 34 dans les zones d'enserrement des crochets 153, 152 et 151.

La longueur de la portion rectiligne 331 est sensiblement égale à la distance séparant, selon un axe horizontal transversal de l'embase 1, l'encoche 194 de la bordure périphérique 14 du crochet 153 qui en est le plus éloigné. Ainsi, lorsque les crochets 154 et 153 sont verrouillés autour de la barre métallique 33, l'action combinée du crochet 153, sur la portion incurvée 332 de la tige, et de la butée 32, sur la zone d'arrêt correspondante de la bordure périphérique 14, permet de supprimer le seul degré de liberté de la nacelle 3 montée coulissante par rapport à l'embase 1. La nacelle 3 est alors en position d'installation et est parfaitement assemblée à l'embase 1.

Une action sur des moyens de commande de l'embase 1 permettant de faire passer les crochets 151 à 154 de leur position de verrouillage à leur position de déverrouillage est alors nécessaire pour permettre de nouveau le guidage en translation de la nacelle 3 dans l'embase 1.

### 6.5 Utilisations de l'embase et de la nacelle

Les conformations respectives de l'embase et de la nacelle permettent ainsi un assemblage particulièrement facile de la nacelle sur l'embase. La nacelle peut ainsi être montée dans un véhicule quand l'embase 1 est installée sur une place latérale du véhicule, proche d'une portière. L'adulte portant la nacelle peut facilement poser sur l'embase la portion avant de la nacelle, puis pousser la nacelle pour provoquer le coulissement et le verrouillage de la nacelle par rapport à l'embase, en position d'installation.

Dans certains cas, tel que celui représenté en figure 5, lorsque la nacelle est en position d'installation, la portion arrière de la nacelle, correspondant à la zone recevant les pieds de l'enfant, ne dépasse pas significativement du bord latéral de l'embase et n'empêche donc pas la fermeture de la portière du véhicule, tandis que la portion avant de la nacelle, correspondant à la zone recevant la tête de l'enfant, n'est plus au dessus de l'embase et est en porte-à-faux, par exemple au dessus d'une place centrale du véhicule.

Il est à noter également que les formes respectives de l'embase 1 et de la nacelle 3 permettent le montage de la nacelle sur l'embase dans deux positions, les pieds de l'enfant pouvant être situés à droite ou à gauche par rapport à la direction de l'avancement du véhicule. La nacelle peut ainsi être montée très facilement sur l'embase 1, que cette embase soit placée sur un siège jouxtant une portière droite ou une portière gauche du véhicule.

Une embase selon l'invention permet ainsi de supporter, au choix de l'utilisateur, soit une coque, soit une nacelle 3, sans que la position de l'embase doive être changée. Par ailleurs, la même commande de verrouillage et de déverrouillage peut être utilisée pour verrouiller et déverrouiller une nacelle et une coque, voire les mêmes crochets. Une telle embase permet ainsi de simplifier sensiblement l'installation d'un enfant en bas âge dans un véhicule, notamment quand il est transporté dans une nacelle.

La nacelle peut comprendre au moins une poignée centrale permettant son transport. De manière additionnelle, la nacelle peut comprendre également une poignée d'extrémité, formée à l'arrière de la nacelle, permettant de contrôler le guidage en translation de la nacelle dans l'embase. Ces poignées permettent ainsi une manipulation aisée de la nacelle dans l'espace restreint offert par l'habitacle du véhicule, en particulier lors des étapes de solidarisation et de désolidarisation de la nacelle par rapport à l'embase, une main supportant l'essentiel du poids à l'aide des poignées centrales, et l'autre main équilibrant et guidant la nacelle pour l'assemblage avec l'embase.

### 6.6 Moyens anti-basculement - premier mode de réalisation

Comme on le voit sur la figure 5, lorsque la nacelle 7 est montée sur l'embase 1, la nacelle se trouve en porte-à-faux. Les tiges 33 et 34 sont maintenues par les crochets 151 à 154, maintenant la nacelle en position sensiblement horizontale (dès lors, bien sûr, que la nacelle est correctement solidarisée au véhicule, via les pinces ISOFIX).

La nacelle 7 présente donc une première portion P1 s'étendant essentiellement au dessus de l'embase, et correspondant dans ce mode de réalisation à la zone dans laquelle se trouvent les pieds de l'enfant, et une seconde portion P2, s'étendant au-delà de l'embase, au dessus de la banquette du véhicule, et dans laquelle se trouve la tête de l'enfant.

On comprend donc que, lorsque les crochets de verrouillage 151 à 154 sont déverrouillées, l'utilisateur souhaitant extraire la nacelle 7 du véhicule, celle-ci risque de basculer, du fait du porte-à-faux, comme illustrée par la flèche F. Ceci n'est bien sûr pas souhaitable, l'enfant risquant d'être blessé, ou à tout le moins bousculé. En outre, les manipulations pour extraire la nacelle sont alors plus compliquées. Dans certains cas, la nacelle risque même de basculer vers l'avant du véhicule.

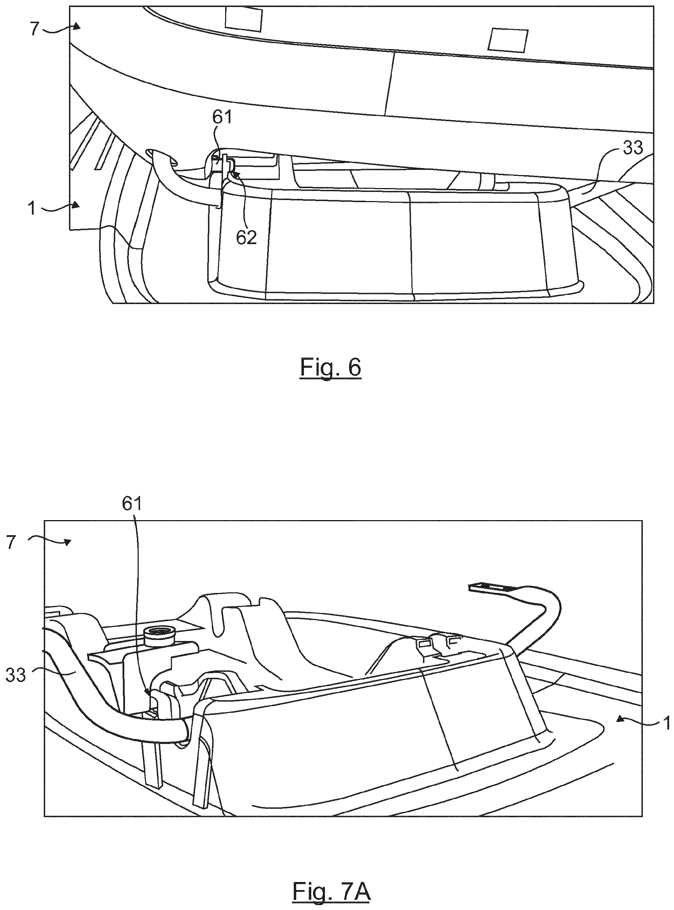

Pour éviter un tel basculement, l'invention prévoit des moyens anti-basculement, visibles notamment sur la figure 6, qui est une vue agrandie de la portion entourée d'un cercle de la figure 5. Ces moyens anti-basculement comprennent un pion 61, monté sur la nacelle 7 (illustrée en pointillés ou en transparence sur les figures 7A à 7C dans lesquelles les moyens anti-basculement apparaissent en transparence), et s'étendant dans une direction parallèle à l'axe longitudinal de la nacelle 7, dans la direction de coulissement de celle-ci. Ce pion 61 vient se loger, lorsque la nacelle est dans sa position assemblée à l'embase (figure 5) dans un logement, ou cavité, 62, prévu à cet effet sur l'embase 1. Ainsi, dans cette position assemblée, le pion 61 coopère avec le logement 62, pour s'opposer au basculement (flèche F), même lorsque les crochets 151 à 154 sont déverrouillés.

Le pion 61 présente ici une section circulaire, mais il peut être de toute section adaptée. Il peut également être orienté dans une autre direction.

Le logement 62 peut être remplacé par une simple butée, dès lors que le déplacement du pion 61 vers le haut est empêché.

Plusieurs pions peuvent être prévus. Le terme pion s'entendant ici de façon large, comme toute pièce présentant une extension apte à venir en contact avec un élément formant butée.

Par ailleurs, l'emplacement du pion et de son logement peuvent être inversés, le pion, ou partie mâle, étant formé sur l'embase et le logement, et plus généralement la butée, étant formée sur la nacelle. Dans ce cas, bien sûr, pour s'opposer au basculement cette butée s'étend sous le pion.

Il est ainsi possible de déverrouiller la nacelle, à l'aide d'une commande prévue à cet effet (non représentée), puis, dans un second temps, de sortir du véhicule, la nacelle, en la faisant coulisser vers l'extérieur, comme illustré par les figures 7A à 7C.

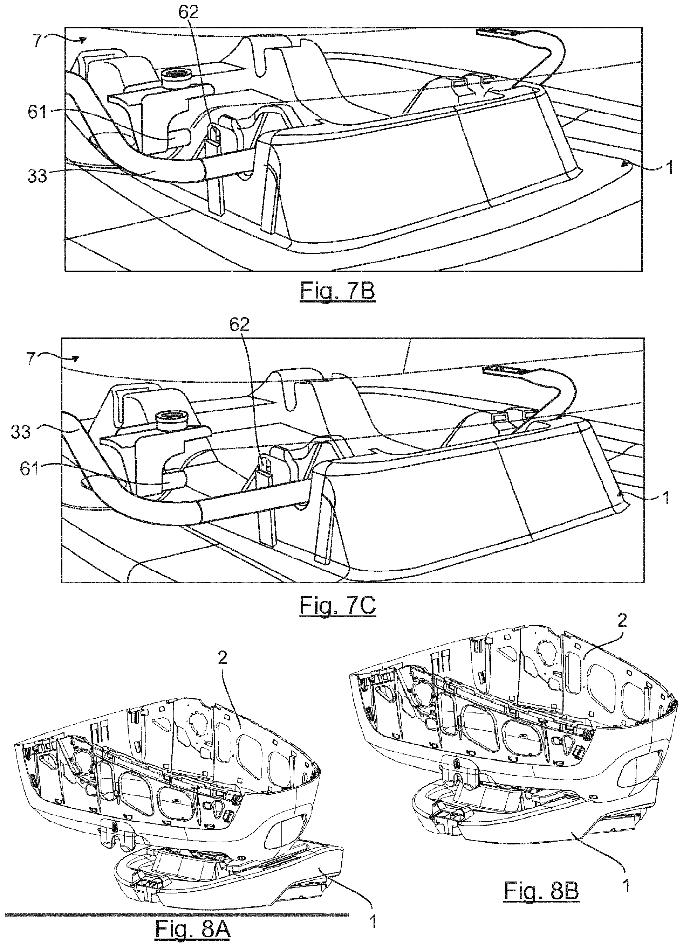

La figure 7A illustre la position assemblée, dans laquelle le pion 61 coopère avec le logement 62. La figure 7B illustre le début du coulissement vers l'extérieur du véhicule. Le pion 61 est alors partiellement extrait de la cavité 62. Enfin, sur la figure 7C, le pion 61 est complètement sorti du logement 62.

Ainsi, on constate qu'il est aisé de retirer la nacelle 7, simplement en la faisant coulisser le long de l'embase 1, dès lors que les crochets de verrouillage 151 à 154 ont été déverrouillés. Aucune manipulation particulière n'est nécessaire, pour agir sur le pion. Le risque de basculement est cependant supprimé, puisque l'utilisateur maintien fermement la nacelle 7 pour la faire coulisser et l'extraire du véhicule. On dispose ainsi d'un système simple et efficace, supprimant le risque de basculement.

L'installation de la nacelle 7 sur l'embase 1 se fait également de façon simple, le pion 61 et le logement 62 s'assemblant « automatiquement », lorsqu'on coulisse la nacelle sur l'embase, selon la succession des figures 7C à 7A, de façon symétrique à l'extraction de la nacelle.

### 6.7 Deuxième mode de réalisation : nacelle pouvant prendre au moins deux positions par rapport à l'embase

Selon ce deuxième mode de réalisation particulier, au moins deux positions de transport sont prévues, correspondant à des emplacements distincts de la nacelle 2 par rapport à l'embase 1, selon l'axe de translation de la nacelle. Il est donc prévu des moyens de sélection, permettant de choisir l'une des positions de transport.

Les figures 8A et 8B illustrent ainsi deux exemples de position de transport, qui peuvent être, selon les cas, les deux seules positions prévues ou deux positions extrêmes, une ou plusieurs positions intermédiaires pouvant être disponibles.

La figure 8A illustre une position dite position de gabarit, qui répond aux exigences du gabarit du règlement européen R129. Cette position garantit donc que l'équipement formé de la nacelle 2 et de l'embase 1 peut être utilisé dans tout véhicule respectant lui-même ce règlement. Dans cette position, l'arrière de la nacelle 2 est sensiblement affleurant avec l'embase 1, et l'avant de la nacelle 2 déborde de façon relativement importante au-delà de l'embase 1.

Comme indiqué précédemment, ceci peut être gênant, dans certaines situations, par exemple, pour installer un siège auto pour enfant à côté de la nacelle 2, ou pour conserver un espace suffisant pour qu'un adulte puisse s'installer.

Dans la seconde position de transport, illustré par la figure 8B, la nacelle 2 est donc décalée, c'est-à-dire rapprochée de la portière par laquelle elle a été installée, par rapport à la position de gabarit. Cette position, dite position de gain de place, est « hors gabarit » réglementaire, et peut donc ne pas être utilisable dans certains véhicules. Toutefois, dans de nombreux véhicules, l'espace entre l'arrière de la nacelle 2 et la portière est relativement important, dans la position de gabarit (classiquement supérieur à 150 millimètres), et il s'agit d'un espace perdu, au détriment de l'espace de l'autre côté. Il est donc efficace de pouvoir décaler la nacelle 2, comme illustré sur la figure 8B.

L'écart entre la position de gabarit et la position de gain de place peut, par exemple, être de 120 millimètres. Une ou plusieurs positions intermédiaires peuvent être prévues, voire un réglage continu, pour s'adapter de façon efficace à un grand nombre de véhicules.

Bien sûr, une fois la position de transport choisie, celle-ci doit être figée : il ne faut pas que, pendant le transport, la nacelle 2 puisse se déplacer en translation... (Dans certains modes de réalisation, on peut cependant prévoir un effet fusible, pour absorber l'énergie et/ou optimiser la position de l'enfant dans le véhicule). Des moyens de sélection d'une position de transport sont donc prévus, sur l'embase et/ou la nacelle. L'utilisateur sélectionne la position dans le transport choisi, et celle-ci est ensuite la position systématiquement disponible, lors de l'installation (jusqu'à un changement de sélection par l'utilisateur). En variante, les moyens de verrouillage peuvent assurer la sélection, en garantissant l'absence de translation, lorsque le verrouillage est activé, dans la position choisie par l'utilisateur lors de l'introduction et de la translation de la nacelle 2 par rapport à l'embase 1.

Plusieurs approches peuvent être envisagées, pour permettre la sélection d'au moins deux positions de transport.

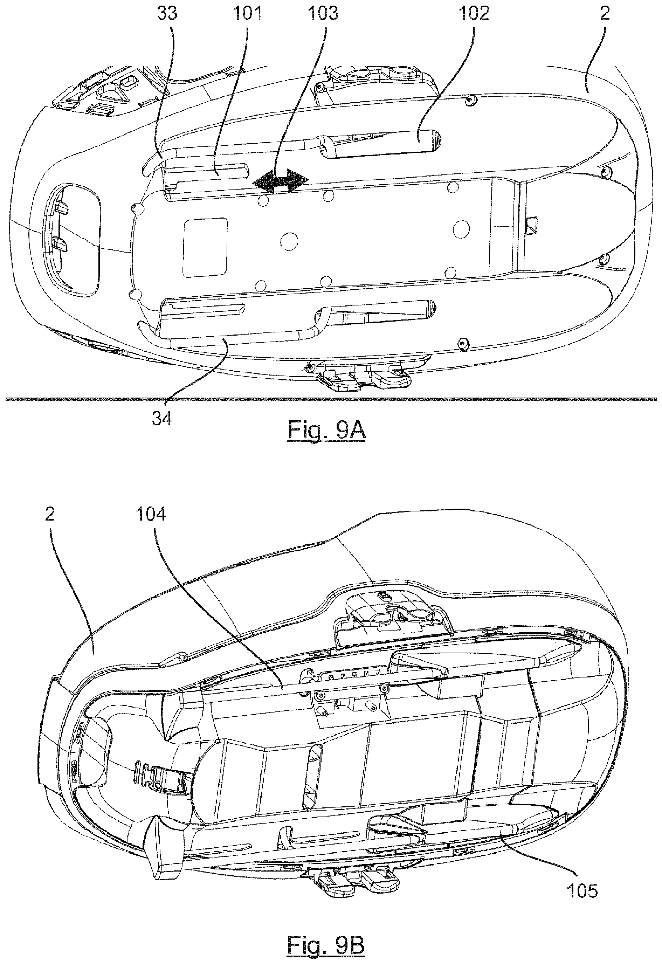

Ainsi, comme illustré sur la figure 9A, les tiges 33, 34 peuvent être mobiles par rapport à la nacelle 2, en translation parallèlement à l'axe de translation de cette nacelle. Des lumières oblongues 101, 102 sont prévues dans la coque de la nacelle 2 pour permettre le déplacement de la tige 33. Un mécanisme de blocage (non représenté est bien sûr prévu). La position illustrée sur la figure 9A correspond à la position de gabarit. La position correspondant à l'autre extrémité des lumières 101 et 102 correspond à la position de gain de place.

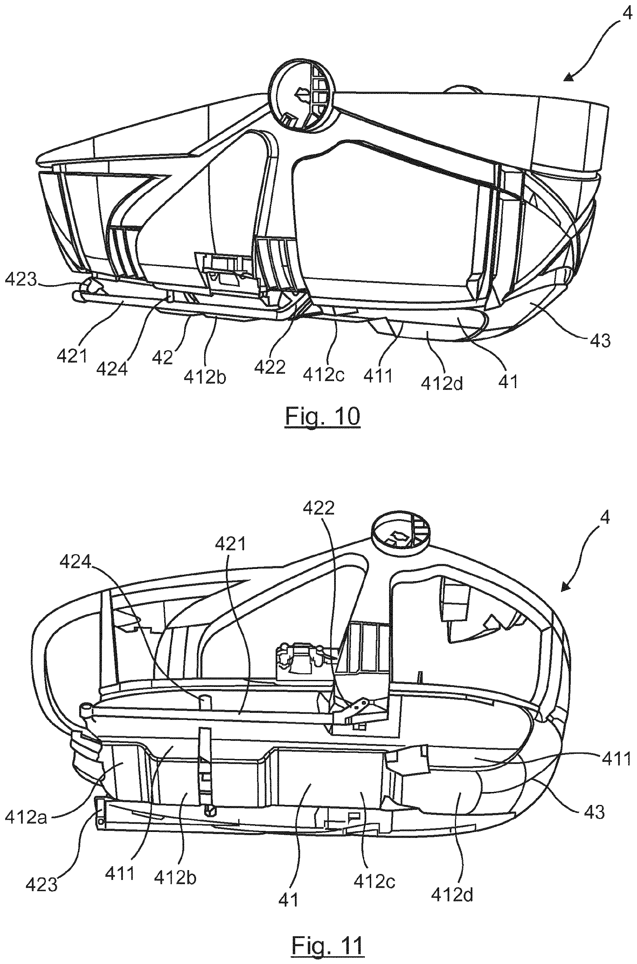

Selon une autre approche, illustrée en figure 9B, les tiges 104 et 105 sont de longueurs supérieures à celles des tiges 33, 34 de la figure 10A, et sont donc adaptées à être mises en oeuvre dans toutes les positions de transport. Des moyens de sélection dans la position de transport, non représentés, doivent bien sûr être mis en oeuvre, pour sélectionner de façon efficace la position de transport choisie. Comme pour d'autres modes de réalisation décrits, il peut notamment s'agir d'une butée réglable, sur l'embase et/ou sur la nacelle (par exemple sur les tiges elles-mêmes).

### 6.8 Exemple de nacelle et d'embase dans ce deuxième mode de réalisation

L'embase selon ce mode de réalisation peut être identique à l'embase illustrée sur la figure 1. Les références en lien avec l'embase sont donc les mêmes que pour le mode de réalisation précédent.

Cette embase 1 est adaptée pour le guidage en translation d'une nacelle dans une direction sensiblement horizontale et sensiblement perpendiculaire à la direction d'avancement du véhicule.

La nacelle 4, spécialement adaptée pour être portée par l'embase 1, est par exemple du type illustré sur les figures 10 et 11. Cette nacelle 4 se distingue notamment des nacelles 7, 2 et 3 des premier et deuxième modes de réalisation de l'invention, par la conformation de sa face inférieure, visible sur les figures 10 et 11.

La nacelle 4 comprend ainsi, sur sa face inférieure, un coulisseau 41 qui s'étend selon une direction longitudinale. Les bords latéraux 411 du coulisseau 41 présentent une forme complémentaire de la forme de rainure incurvée des découpes centrales 181 et 182 de l'embase 1. Cela permet ainsi le guidage en translation selon l'axe horizontal (F1), lorsque l'embase 1 est installée dans le véhicule, de la nacelle 4 dans les découpes complémentaires 181 et 182 de la bordure périphérique 14.

Le coulisseau 41 présente un profil particulier qui comprend, dans ce mode de réalisation, quatre sections 412.

La première section 412a est situé à l'arrière de la nacelle et présente un profil rectiligne qui s'étend dans un plan horizontal. Cette première section 412a est donc plane.

Une deuxième section 412b prolonge la première section 412a environ jusqu'au milieu de la nacelle 4. Cette deuxième section présente un profil en U dont les branches sont légèrement inclinées afin de présenter un angle obtus entre les branches et la base du U. La base du U s'étend dans un plan parallèle au plan de la première section 412a.

Plus précisément, la deuxième section 412b s'étend dans un plan dont la distance par rapport à la face inférieure de la nacelle 4 est plus importante que la distance entre le plan horizontal de la première section 412a et la face inférieure de la nacelle. La deuxième section 412b forme donc un bossage par rapport à la première section 412a.

Une troisième section 412c s'étend dans le prolongement de la deuxième section 412b, c'est-à-dire à partir du milieu de la nacelle vers l'avant de la nacelle. Cette troisième section 412c est plane et s'étend sensiblement dans le même plan que la première section 412a.

Ainsi, les première 412a et troisième 412c sections sont séparées par la deuxième section 412b qui s'étend dans un plan différent. La jonction entre la deuxième section 412b et les première 412a et troisième 412c sections est obtenue grâce à l'inclinaison des branches du U de la deuxième section 412b, afin d'obtenir une liaison progressive, comme illustrée sur la figure 10.

La quatrième section 412d s'étend dans le prolongement de la troisième section 412c et vers l'avant de la nacelle 4. Cette quatrième section 412d s'étend sensiblement dans le même plan que la deuxième section 412b, et donc dans un plan différent des première et troisième sections.

La quatrième section 412d présente une portion de liaison avec la troisième section 412c qui s'étend de façon inclinée afin de fournir une jonction progressive entre les troisième 412c et quatrième 412d sections.

La nacelle 4 comprend de plus deux tiges cylindriques métalliques 42 disposées de part et d'autre du coulisseau 41, chacune de ces tiges étant constituée d'une portion rectiligne 421, et d'au moins une portion incurvée 422, à l'extrémité de la tige orientée vers l'avant de la nacelle.

Plus précisément, la portion rectiligne 421 de la tige 42 s'étend selon une direction sensiblement parallèle à la direction longitudinale de la nacelle 4 à partir de la l'arrière de la nacelle, c'est-à-dire sensiblement au voisinage du début de la première portion 412a du coulisseau 41.

Cette portion rectiligne 421 est agencée de manière à pouvoir, lorsque le coulisseau 41 coulisse dans les découpes 181 et 182, venir s'engager dans une des encoches 192, 194 de la bordure périphérique 14 de l'embase 1. A cet effet, la portion rectiligne 421 de la tige 42 est dimensionnée de manière à présenter une forme sensiblement complémentaire à la forme incurvée du renfoncement de l'encoche 194.

La portion d'extrémité 422 est incurvée vers le haut et s'étend dans le prolongement de la portion rectiligne 421, en formant ici un angle obtus avec cette dernière. Cette portion incurvée 422 est solidarisée avec la face inférieure de la nacelle 4. La formation entre la portion rectiligne 421 et la portion incurvée 422 d'un angle obtus a pour avantage de permettre, lors du coulissement de la nacelle, le verrouillage des crochets 151 à 154 autour des barres et, notamment, des portions 421.

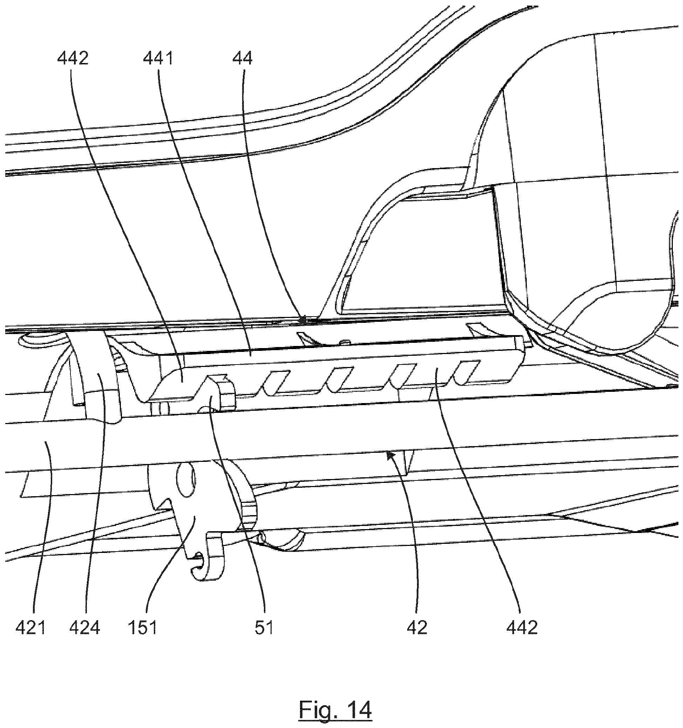

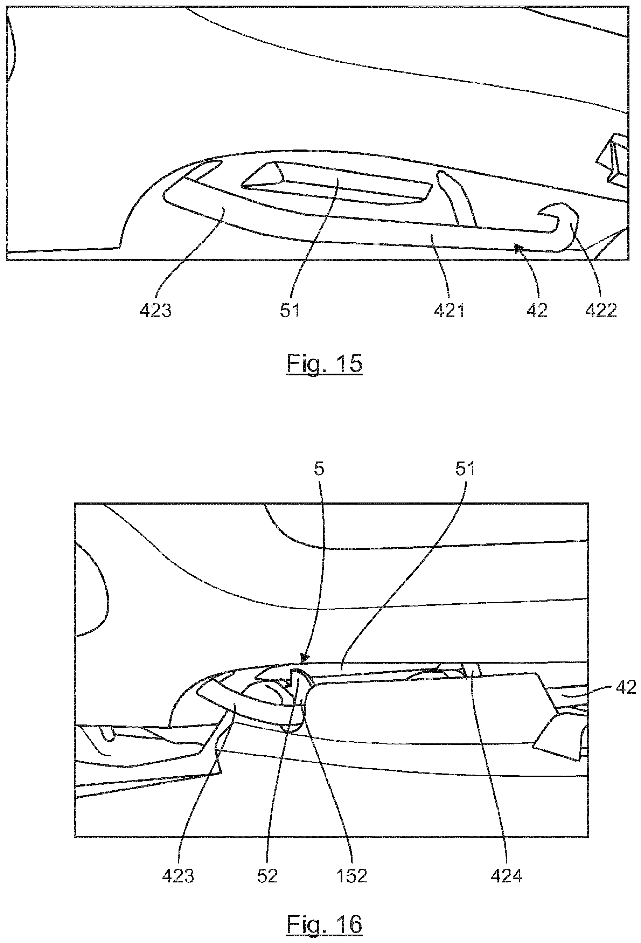

L'extrémité de la tige orientée vers l'arrière de la nacelle est, comme illustrée sur les figures 10 et 11, reliée à la face inférieure de la nacelle 4 par un montant 423 qui s'étend perpendiculairement à la tige 42. Dans une variante illustrée sur les figures 14 et 15, l'extrémité arrière de la tige 42 présente une portion 423 incurvée qui s'étend dans le prolongement de la portion rectiligne et vers l'arrière et la face inférieure de la nacelle 4.

Ces tiges métalliques 42 comprennent également une traverse 424 qui s'étend perpendiculairement à l'axe longitudinal de la nacelle. Cette traverse 424 se situe sensiblement au milieu de la longueur de la tige 42 et relie les tiges l'une à l'autre.

La traverse 424 est solidaire de la face inférieure de la nacelle 4. Ainsi, la traverse 424 agit comme un pont de reprise d'effort qui permet de limiter les efforts/contraintes mécaniques appliquées sur les tiges en transmettant ces contraintes à la face inférieure de la nacelle 4. Ces contraintes sont dissipées dans la structure de la nacelle 4 et la longueur des tiges 42 peut donc être augmentée afin de proposer un nombre plus important de position d'utilisation de la nacelle 4 sur l'embase 1, sans risque de déformation des tiges 42.

L'avant de la nacelle peut, dans ce mode de réalisation, présenter une portion incurvée 43, illustrée sur la figure 10, qui relie la paroi latérale de la nacelle à la surface inférieure. Cette portion incurvée 43 s'étend dans le prolongement de la quatrième portion 412d et s'étend vers l'avant de la paroi latérale de la nacelle 4.

Cette portion incurvée 43 présente une forme complémentaire des découpes 181 et 182 formant coulisse afin de faciliter l'introduction de la nacelle dans l'embase, en ajustant progressivement la position de la nacelle 4 lorsque cette dernière est introduite dans l'embase 1 selon une direction légèrement désaxée par rapport à l'axe défini par les découpes 181 et 182 de l'embase 1.

Il est ainsi possible de placer la nacelle 4 sur l'embase 1 par un mouvement de translation dans la direction horizontale perpendiculaire à la direction d'avancement du véhicule, selon la flèche FT représentée sur la figure 1. Pour ce faire, le coulisseau 41 et les tiges métalliques 42 de la nacelle 4 s'engagent respectivement par coulissement dans la découpe centrale 182 et les renforcements 194 et 192 de l'embase 1.

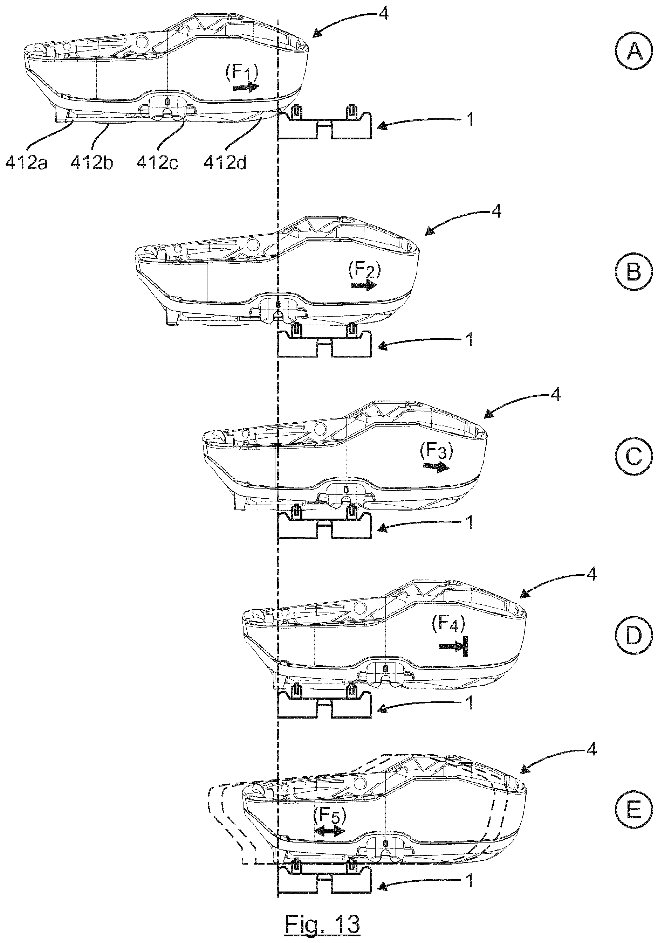

La figure 13 illustre le déplacement de la nacelle 4 sur l'embase 1 fixe, lors de son installation/solidarisation.

Le placement/installation de la nacelle 4 sur l'embase 1 s'effectue en trois phases.

Lors de la première phase, l'utilisateur pose l'avant de la nacelle 4, c'est-à-dire la quatrième section 412d, dans la découpe centrale 182 puis pousse la nacelle selon la direction de la flèche F1. Ainsi, lors de ce déplacement, la nacelle 4 est, par le biais de la quatrième section 412d, en appui sur l'embase 1 sur la découpe centrale 182. La poursuite de ce déplacement de la nacelle fait que la quatrième section 412d vient ensuite en appui sur les supports de crochets 1540 et 1520 et pour finir sur la découpe centrale 181.

Lorsque l'utilisateur continue de pousser la nacelle 4 selon la flèche F2, la quatrième section 412d du coulisseau 41 dépasse la découpe centrale 181 située à l'autre extrémité de l'embase 1. Commence alors la deuxième phase dans laquelle la troisième section 412c entre en contact avec la découpe centrale 182. La troisième section 412c s'étendant dans un plan plus haut que le plan de la quatrième section 412d, la surface de la nacelle 4 est plus proche de l'embase dans la deuxième phase que dans la première.

Cette différence de hauteur des quatrième 412d et troisième 412c sections permet, dans la deuxième phase et selon un déplacement selon la flèche F3, que les tiges métalliques 41 entrent en contact avec les crochets 154, 152 à proximité de la portion incurvée 422 située la plus à l'avant de la nacelle 4.

Le déplacement en translation de la nacelle 4 force les crochets 152, 154 à passer de leur position déverrouillée à leur position verrouillée, lors du passage de la portion incurvée 422 à travers la zone d'enserrement du crochet 154. Le crochet 154 enserre alors, en combinaison avec le renforcement 1540 associé, la portion rectiligne 421 de la tige 42. Le passage des crochets 152, 154 en position verrouillée permet ainsi de limiter les déplacements latéraux de la portion rectiligne 421 tout en permettant ses déplacements longitudinaux.

Lorsque l'utilisateur poursuit le déplacement de la nacelle 4, selon la flèche F4, la troisième section 412c dépasse alors la découpe centrale 181 et c'est la deuxième section 412b qui entre en contact avec la découpe centrale 182. Ceci correspond à la troisième phase d'installation de la nacelle 4.

La poursuite du coulissement de la nacelle 4 par rapport à l'embase 1 permet aux tiges métalliques 42 d'atteindre les seconds crochets 151, 153 qui se verrouillent de la même façon sur les tiges.

En raison de la conformation des crochets par rapport à celle des tiges 42, le passage des crochets vers leur position verrouillée autour de la portion rectiligne 421 des tiges empêche tout passage ultérieur de la portion incurvée 422 au travers de la zone d'enserrement, de par le seul déplacement en translation de la nacelle 4 selon une direction opposée. La nacelle 4 est alors verrouillée sur l'embase 1.

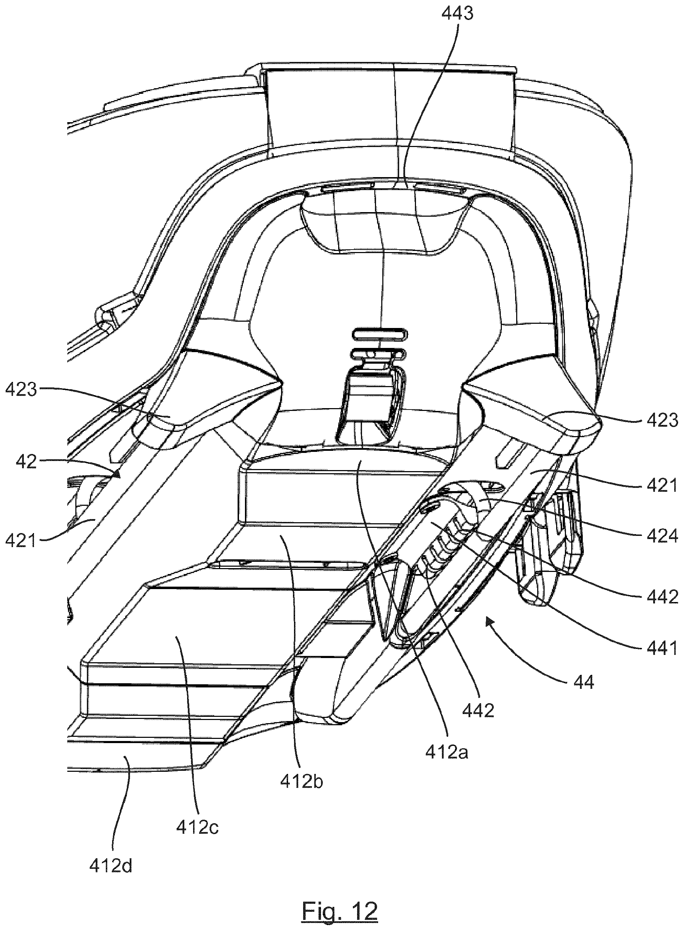

La nacelle 4 de ce deuxième mode de réalisation comprend des moyens de sélection 44 d'une position de la nacelle sur l'embase, parmi plusieurs positions (sélectionnables en fonction de l'espace disponible dans le véhicule), dont un mode de réalisation est illustré sur les figures 12 et 14. Pour ce faire, les moyens de sélection 44 se présente sous la forme d'un peigne, ou une crémaillère, 441 de réglage situé sensiblement dans un plan vertical confondu avec le plan longitudinal d'une des deux tiges métalliques 42. Dans ce mode de réalisation, un seul peigne 441 est mis en oeuvre sur le côté droit de la nacelle 4. On comprend bien évidemment que le peigne peut être placé de l'autre côté de la nacelle ou qu'un peigne peut être prévu de chaque côté de la nacelle sans modifier le principe de fonctionnement de ces moyens de sélection de la positon de la nacelle.

Le peigne 441 est donc situé au-dessus d'une des tiges métalliques 42. Plus précisément, il est situé entre la traverse 424 et la portion incurvée avant 422 de la tige 42.

Ce peigne 441 est destiné à coopérer, lorsque la nacelle 4 est verrouillée sur l'embase 1, avec la partie supérieure des crochets 151 ou 154 (selon le siège sur lequel est fixée l'embase), tel qu'illustré sur la figure 14. Ainsi, le peigne 441 comprend une pluralité d'encoches 442 correspondant chacune à une position d'utilisation de la nacelle 4 sur l'embase 1.

Une poignée 443, située dans cet exemple à l'arrière de la nacelle 4, permet de déplacer le peigne 441 autour d'un axe de rotation (non visible) entre une position verrouillée, dans laquelle le peigne 441 est en contact avec la surface supérieure des crochets et coopère avec ces derniers, et une position déverrouillée, dans laquelle le peigne 441 est relevé, par pivotement autour de l'axe de rotation, et n'est plus en contact avec les crochets de manière à permettre un déplacement en translation des tiges 42 dans les crochets 151 à 154, laissant ainsi la possibilité de régler la position de la nacelle sur l'embase.

Comme illustré sur la figure 13, la nacelle 4 peut alors être déplacée sur l'embase 1, selon la flèche F5, afin de choisir et verrouiller la position souhaitée.

### 6.9 Deuxième mode de réalisation de moyens anti-basculement

La nacelle 4 de ce deuxième mode de réalisation comprend en outre des moyens anti-basculement 5 de la nacelle 4 lorsqu'elle est installée sur l'embase 1. En effet, lorsque la nacelle 4 est solidaire de l'embase 1, la partie avant de la nacelle (celle portant la tête de l'enfant) est située en porte-à-faux par rapport à l'embase. Ainsi, il existe un risque, lorsque la nacelle est déverrouillée, que cette dernière bascule et tombe de l'embase. Un tel basculement peut entrainer une chute de l'enfant, ce qui n'est absolument pas souhaitable.

Pour éviter cette situation, la nacelle 4 présente donc, comme illustré sur les figures 15 à 17B, des moyens anti-basculement 5 de la nacelle qui comprennent un élément de retenue, ou rebord, 51 solidaire de la nacelle 4. Plus précisément, un tel rebord (formant par exemple barrette ou languette) 51 est situé sur la face inférieure de la nacelle 4, sensiblement entre la traverse 424 et la portion incurvée arrière 423 de la tige métallique 42.

Ce rebord 51 s'étend longitudinalement, à proximité de la tige métallique 42. Dans cet exemple, le rebord n'est mis en oeuvre que sur le côté droit de la nacelle 4. On comprend bien évidemment que le rebord pourrait être mis en oeuvre de l'autre côté ou de chaque côté de la nacelle sans modifier le principe de fonctionnement des moyens d'anti-basculement 5.

Le rebord 51 comprend deux surfaces, une première surface 511 qui s'étend selon un plan vertical et une seconde surface qui s'étend selon un plan horizontal de façon à former un "L".

Les crochets 151 à 154 de l'embase 1 ont été modifiés par l'ajout d'une crête, ou aileron, 52 qui s'étend vers le haut lorsque le crochet est dans sa position verrouillée.

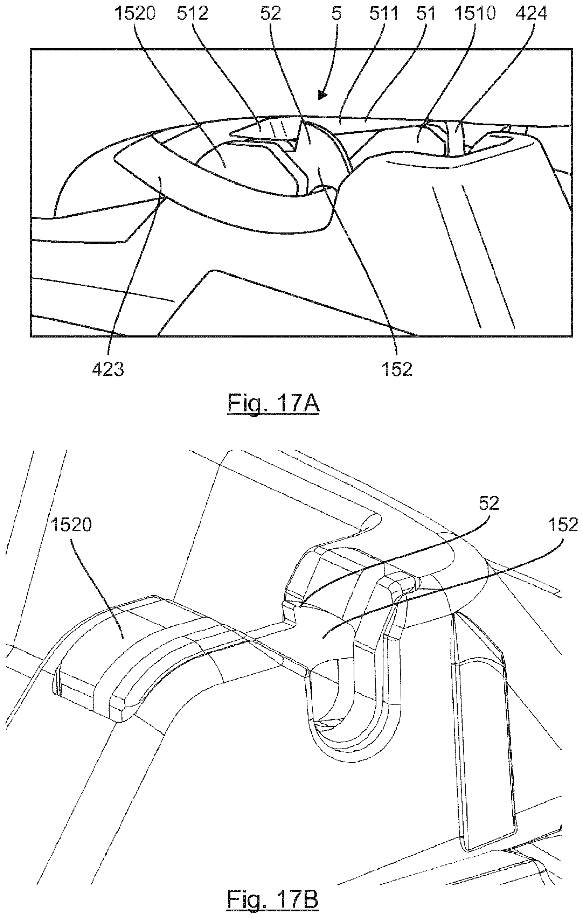

Ainsi, comme illustré sur la figure 17A, lorsque la nacelle 4 est en position sur l'embase 1, la deuxième surface 512 du rebord 51 est en appui sur le support 1520 du crochet 152, et l'aileron 52 vient en appui/butée contre la première surface 511 du rebord 51. L'aileron forme une butée, coopérant avec le rebord formant contrebutée.

La mise en appui de l'aileron 52 contre la première surface 511 empêche donc le crochet 152 de passer de sa position verrouillée vers sa position déverrouillée tant que la nacelle 4 n'est pas ramenée dans une position stable par rapport à l'embase, sans porte-à-faux, par translation (correspondant notamment à une première phase de retrait de la nacelle), de façon que le rebord 51 ne soit plus en regard de l'aileron 52. A ce moment, l'aileron, et donc le crochet qui le porte, peut basculer, permettant le retrait de la nacelle.

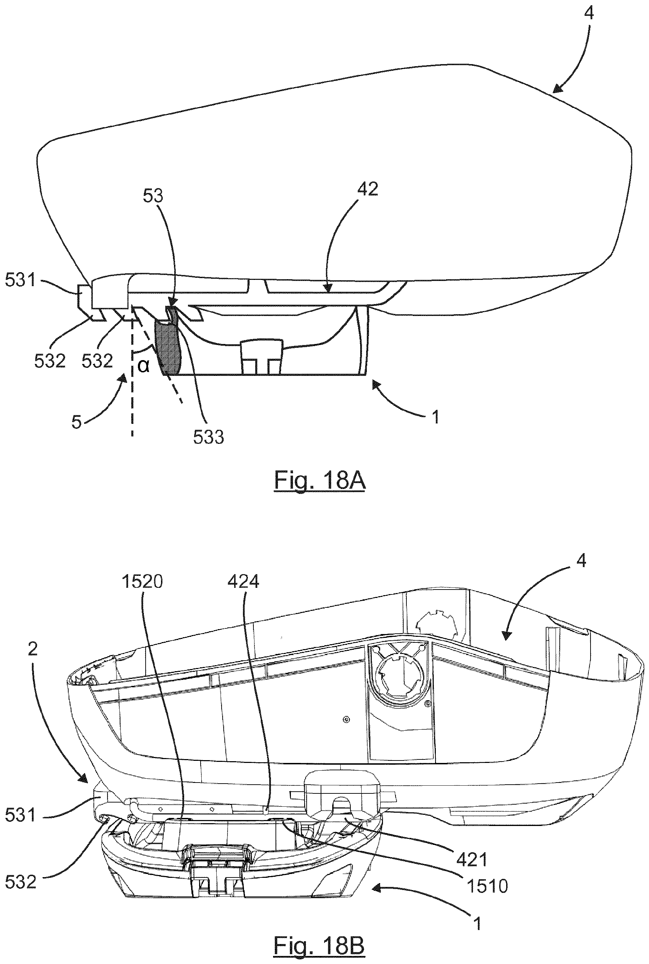

Dans une variante, illustrée sur les figures 18A et 18B, les moyens d'anti-basculement 5 sont définis par un système d'engrenage 53. Plus précisément, la face inférieure de la nacelle 4 présente une première barre 531 dentée. Les dents 532 de cette première barre 531 s'étendent selon un angle α compris entre 10° et 90°. Les dents 532 sont orientées/inclinées vers l'avant de la nacelle 4.

La première barre 531 dentée est destinée à coopérer avec une encoche 533 ménagée par l'embase 1. Cette encoche 533 présente une forme et une inclinaison correspondantes aux dents 532 de la première barre 531 portée par la nacelle 4.

Ainsi, lorsque la nacelle 4 est posée/installée sur l'embase 1 et qu'une des dents 532 de la barre 531 coopère avec l'encoche 533, l'inclinaison des dents 532 permet d'éviter le basculement de la nacelle 4 lorsque les crochets de l'embase 1 sont en position déverrouillée. L'utilisateur peut aisément retirer la nacelle 4 de l'embase 1 en tirant et levant, de façon simultanée, la nacelle 4 de manière à ce que la barre 531 ne coopère plus avec l'encoche 533.

Les moyens anti-basculement 5, selon cette variante, peuvent aisément être adaptés par l'homme du métier afin d'être mis en oeuvre complémentairement comme moyens de sélection de la position de la nacelle 4 sur l'embase 1. En effet, la première barre dentée 531 présente une pluralité de dents 532 qui peuvent correspondre aux différentes positions d'utilisations de la nacelle 4. Ainsi, l'utilisateur peut aisément sélectionner/modifier la position de la nacelle 4 sur l'embase 1 en déplaçant la nacelle de façon à faire coopérer l'une des dents 532 avec l'encoche 533 ménagée dans l'embase 1. Il est à noter cependant que les moyens anti-basculement décrits avec ce deuxième mode de réalisation n'imposent pas que la nacelle puisse prendre plusieurs positions de transport par rapport à la nacelle.

## Revendications

1. Equipement de transport d'un enfant en bas âge dans un véhicule, comprenant une embase (1) destinée à être solidarisée à un siège dudit véhicule et une nacelle (2, 3, 4, 7) permettant d'accueillir ledit enfant en position allongée dans la direction longitudinale de la nacelle, et pouvant être solidarisée à ladite embase (1), une première portion de ladite nacelle (2, 3, 4, 7) s'étendant alors sensiblement au-dessus de ladite embase (1), et une seconde portion de ladite nacelle (2, 3, 4, 7) s'étendant au-delà ladite embase (1), des moyens de verrouillage assurant la solidarisation entre ladite nacelle (2, 3, 4, 7) et ladite embase (1), **caractérisé en ce qu'**il comprend des moyens anti-basculement (5, 61, 62), lesdits moyens anti-basculement étant :
- actifs tant que ladite nacelle (2, 3, 4, 7) est dans une position de porte-à-faux par rapport à ladite embase (1), et s'opposant à un basculement de ladite nacelle (2, 3, 4, 7) par rapport à ladite embase (1) dû audit porte-à-faux, mais autorisant un coulissement de ladite nacelle (2, 3, 4, 7) par rapport à ladite embase (1) pour ramener ladite nacelle dans une position sans porte-à-faux par rapport à l'embase, lorsque lesdits moyens de verrouillage sont déverrouillés ou en cours de déverrouillage ; et
- inactifs lorsque ladite nacelle (2, 3, 4, 7) est dans ladite position sans porte-à-faux,
et **en ce que** lesdits moyens anti-basculement comprennent :
- au moins un pion (61) s'étendant sensiblement parallèlement à l'axe longitudinal de la nacelle (7) par rapport à l'embase (1), porté par ladite nacelle (7), respectivement ladite embase (1), et venant prendre appui contre une butée ménagée à cet effet dans ladite embase (1), respectivement ladite nacelle (7) ; ou
- au moins un élément de retenue (51) formé sur ladite nacelle (4), et coopérant avec au moins un crochet (152) de verrouillage de ladite embase (1), de façon à empêcher l'ouverture dudit crochet (152) tant que ladite nacelle (4) est dans une position de porte-à-faux ; ou
- au moins un système d'engrenage (53).

2. Equipement selon la revendication 1, **caractérisé en ce que** ledit ou lesdits pions (61) sont portés par ladite nacelle (7).

3. Equipement selon l'une quelconque des revendications 1 et 2, **caractérisé en ce que** ladite butée est la partie supérieure d'un logement (62) apte à recevoir au moins une partie dudit pion (61).

4. Equipement selon l'une quelconque des revendications 1 à 3, **caractérisé en ce que** ledit pion (61) est monté sur une partie inférieure de ladite nacelle (7), au voisinage du bord de la première portion le plus éloigné de la seconde portion.

5. Equipement selon la revendication 1, **caractérisé en ce que** ledit élément de retenue (51) comprend une barrette longitudinale formant saillie coopérant avec une butée (52) solidaire dudit crochet (152), empêchant la rotation de ce dernier tant que ladite butée (52) est en contact avec ladite barrette (51).

6. Equipement selon la revendication 1, **caractérisé en ce que** lesdits moyens anti-basculement (5) comprennent, sur ladite nacelle (4), une barre (531) dentée présentant au moins une dent (532) apte à coopérer avec une encoche (533) formée sur ladite embase (1).

7. Equipement selon l'une des revendications 1 à 6, **caractérisé en ce que** ladite nacelle et ladite embase comprennent des éléments de guidage complémentaires permettant de réaliser un guidage en translation entre ladite nacelle et ladite embase, selon une direction de translation sensiblement parallèle à la direction longitudinale de la nacelle.

8. Equipement selon la revendication 7, **caractérisé en ce que** ladite nacelle (4) et/ou ladite embase (1) comprend des moyens de sélection (44) d'une position de transport parmi au moins deux positions de transport possibles, distribuées selon ladite direction de translation.

9. Nacelle d'un équipement selon l'une quelconque des revendications 1 à 8.

10. Embase d'un équipement selon l'une quelconque des revendications 1 à 8.

## Patentansprüche

1. Vorrichtung zum Transportieren eines Kindes niedrigen Alters in einem Fahrzeug, umfassend eine Basis (1), die dazu bestimmt ist, an einem Sitz des Fahrzeugs befestigt zu werden, und einen Korb (2, 3, 4, 7), der es ermöglicht, das Kind in einer liegenden Position in Längsrichtung des Korbes aufzunehmen, und der an der Basis (1) befestigt werden kann, wobei sich ein erster Abschnitt des Korbes (2, 3, 4, 7) dann im Wesentlichen über der Basis (1) erstreckt und sich ein zweiter Abschnitt des Korbes (2, 3, 4, 7) über die Basis (1) hinaus erstreckt, wobei Verriegelungsmittel die Befestigung zwischen dem Korb (2, 3, 4, 7) und der Basis (1) sicherstellen, **dadurch gekennzeichnet, dass** sie Kippschutzmittel (5, 61, 62) umfasst, wobei die Kippschutzmittel:
- aktiv sind, solange sich der Korb (2, 3, 4, 7) in einer Überhangposition in Bezug auf die Basis (1) befindet, und verhindern, dass der Korb (2, 3, 4, 7) in Bezug auf die Basis (1) aufgrund des Überhanges kippt, aber das Gleiten des Korbes (2, 3, 4, 7) in Bezug auf die Basis (1) ermöglichen, um den Korb in eine Position ohne Überhang in Bezug auf die Basis zurückzuführen, wenn die Verriegelungsmittel entriegelt sind oder entriegelt werden; und
- inaktiv sind, wenn sich der Korb (2, 3, 4, 7) in der Position ohne Überhang befindet,
und dadurch, dass das Kippschutzmittel umfasst:
- mindestens einen Stift (61), der sich im Wesentlichen parallel zur Längsachse des Korbs (7) in Bezug auf die Basis (1) erstreckt, der von dem Korb (7) bzw. der Basis (1) getragen wird und gegen einen zu diesem Zweck in der Basis (1) bzw. dem Korb (7) vorgesehenen Halter anliegt; oder
- mindestens ein Rückhalteelement (51), das auf dem Korb (4) ausgebildet ist und mit mindestens einem Verriegelungshaken (152) der Basis (1) zusammenwirkt, um das Öffnen des Hakens (152) zu verhindern, solange sich der Korb (4) in einer Überhangposition befindet; oder
- mindestens ein Getriebesystem (53).

2. Vorrichtung nach Anspruch 1, **dadurch gekennzeichnet, dass** der oder die Stifte (61) von dem Korb (7) getragen werden.

3. Vorrichtung nach einem der Ansprüche 1 und 2, **dadurch gekennzeichnet, dass** der Halter der obere Teil eines Gehäuses (62) ist, das geeignet ist, mindestens einen Teil des Stiftes (61) aufzunehmen.

4. Vorrichtung nach einem der Ansprüche 1 bis 3, **dadurch gekennzeichnet, dass** der Stift (61) an einem unteren Teil des Korbs (7) in der Nähe des Endes des ersten Abschnitts, der von dem zweiten Abschnitt am weitesten entfernt ist, angebracht ist.

5. Vorrichtung nach Anspruch 1, **dadurch gekennzeichnet, dass** das Rückhalteelement (51) eins hervorstehende Längsstab umfasst, das mit einem mit dem Haken (152) verbundenen Anschlag (52) zusammenwirkt und dessen Drehung verhindert, solange der Anschlag (52) in Kontakt mit dem Stab (51) steht.

6. Vorrichtung nach Anspruch 1, **dadurch gekennzeichnet, dass** die Kippschutzmittel (5) auf dem Korb (4) eine Zahnstange (531) mit mindestens einem Zahn (532) aufweisen, der geeignet ist, mit einer auf der Basis (1) ausgebildeten Kerbe (533) zusammenzuwirken.

7. Vorrichtung nach einem der Ansprüche 1 bis 6, **dadurch gekennzeichnet, dass** der Korb und die Basis komplementäre Führungselemente aufweisen, die eine Translationsführung zwischen dem Korb und der Basis gemäß einer Translationsrichtung, die im Wesentlichen parallel zu der Längsrichtung des Korbs ist, ermöglichen.

8. Vorrichtung nach Anspruch 7, **dadurch gekennzeichnet, dass** der Korb (4) und/oder die Basis (1) Mittel (44) zum Auswählen einer Transportposition aus mindestens zwei möglichen Transportpositionen, die gemäß der Translationsrichtung verteilt sind, aufweist.

9. Korb einer Vorrichtung nach einem der Ansprüche 1 bis 8.

10. Basis einer Vorrichtung nach einem der Ansprüche 1 bis 8.

## Claims

1. Equipment for transporting a young child in a vehicle, comprising a base (1) intended to be secured to a seat of said vehicle and a carrycot (2, 3, 4, 7) for holding said child in a position lying in the longitudinal direction of the carrycot, and being able to be secured to said base (1), a first portion of said carrycot (2, 3, 4, 7) then extending substantially above said base (1), and a second portion of said carrycot (2, 3, 4, 7) extending beyond said base (1), locking means ensuring that said carrycot (2, 3, 4, 7) and said base (1) are secured together,
**characterised in that** it comprises anti-tilting means (5, 61, 62), said anti-tilting means being:
- active as long as said carrycot (2, 3, 4, 7) is in a cantilever position with respect to said base (1), and opposing tilting of said carrycot (2, 3, 4, 7) with respect to said base (1) due to said cantilever, but allowing sliding of said carrycot (2, 3, 4, 7) with respect to said base (1) in order to return said carrycot into a position without cantilever with respect to the base, when said locking means are unlocked or in the course of unlocking; and
- inactive when said carrycot (2, 3, 4, 7) is in said position without cantilever,
and **in that** said anti-tilting means comprise:
- at least one pin (61) extending substantially parallel to the longitudinal axis of the carrycot (7) with respect to the base (1) and coming to bear against a stop provided for this purpose in said base (1), or respectively said carrycot (7); or
- at least one holding element (51) formed on said carrycot (4), and cooperating with at least one locking hook (152) on said base (1), so as to prevent the opening of said hook (152) as long as said carrycot (4) is in a cantilever position; or
- at least one meshing system (53).

2. Equipment according to claim 1, **characterised in that** said pin or pins (61) are carried by said carrycot (7).

3. Equipment according to any of claims 1 and 2, **characterised in that** said stop is the top part of a housing (62) adapted to receive at least part of said pin (61).

4. Equipment according to any of claims 1 to 3, **characterised in that** said pin (61) is mounted on a bottom part of said carrycot (7), in the vicinity of the edge of the first portion furthest away from the second portion.

5. Equipment according to claim 1, **characterised in that** said holding element (51) comprises a longitudinal bar forming a projection cooperating with a stop (52) secured to said hook (152), preventing rotation of the latter as long as said stop (52) is in contact with said bar (51).

6. Equipment according to claim 1, **characterised in that** said anti-tilting means (5) comprise, on said carrycot (4), a toothed bar (531) having at least one tooth (532) adapted to cooperate with a notch (533) formed on said base (1).

7. Equipment according to any of claims 1 to 6, **characterised in that** said carrycot and said base comprise complementary guide elements enabling to effect a translational guidance between said carrycot and said base, in a translation direction substantially parallel to the longitudinal direction of the carrycot.

8. Equipment according to claim 7, **characterised in that** said carrycot (4) and/or said base (1) comprises means (44) for selecting a transport position from at least two possible transport positions, distributed along said translation direction.

9. Carrycot of equipment according to any of claims 1 to 8.

10. Base of equipment according to any of claims 1 to 8.
